# EUROPÄISCHE PATENTSCHRIFT

(11) **EP 3 015 035 B1**
(45) Veröffentlichungstag und Bekanntmachung des Hinweises auf die Patenterteilung: **18.04.2018**
(21) Anmeldenummer: 15405059.5
(22) Anmeldetag: 21.10.2015
(51) Int. Cl.: A47J 31/44, A47J 31/46, B65D 25/28, B65D 43/16

(54) **WASSERBEHÄLTER FÜR EINEN GETRÄNKEAUTOMATEN SOWIE GETRÄNKEAUTOMAT**
WATER CONTAINER FOR A BEVERAGE MACHINE AND BEVERAGE MACHINE
RÉSERVOIR À EAU POUR UN AUTOMATE DE BOISSONS ET AUTOMATE DE BOISSONS

(30) Priorität: 28.10.2014 EP 14405076
(43) Veröffentlichungstag der Anmeldung: 04.05.2016
(73) Patentinhaber: JURA ELEKTROAPPARATE AG, 4626 Niederbuchsiten (CH)
(72) Erfinder: BÜTTIKER, Philipp, 4625 Oberbuchsiten (CH); BAUR, Philipp, 3427 Utzenstorf (CH)
(74) Vertreter: EGLI-EUROPEAN PATENT ATTORNEYS

(56) Entgegenhaltungen:
- CN-U- 202 287 829
- DE-A1- 3 541 479
- DE-B4-102004 004 837
- JP-A- 2004 236 761
- US-B1- 6 405 637

## Beschreibung

Die vorliegende Erfindung betrifft einen Wasserbehälter für einen Getränkeautomaten. Ferner betrifft die vorliegende Erfindung einen Getränkeautomaten, vorzugsweise einen Kaffeevollautomaten, welcher mit einem Wasserbehälter versehen ist.

Getränkebereiter wie beispielsweise Kaffeevollautomaten und dergleichen sind oftmals mit einem abnehmbaren Wasserbehälter versehen, mittels welchem die Zufuhr von Frischwasser für einen Getränkebereitungsvorgang gewährleistet wird.

Um einerseits den Eintrag von Schmutzpartikeln (Staub, etc.) in das Frischwasser zu vermeiden und andererseits für ein optisch ausgewogenes Erscheinungsbild eines derartigen Getränkeautomaten zu sorgen, sind die Wassertanks bzw. Wasserbehälter bei herkömmlichen Getränkeautomaten oftmals mit einem Deckel versehen, welcher im Einbauzustand des Wasserbehälters am Getränkeautomaten, beispielsweise bei seitlichem Anbau oder dergleichen, einen mehr oder weniger glattflächigen und den Staubeintrag reduzierenden Abschluss in die Richtung von oberhalb des Wasserbehälters bietet.

Um ein Nachfüllen von Frischwasser in den Wasserbehälter zu ermöglichen, ist es einerseits vonnöten, den Deckel zu öffnen bzw. zu entfernen und somit einer Einfüllöffnung des Wasserbehälters freizulegen; andererseits ist es - je nach Auslegung des Geräts oder auch nach Kundenwunsch - nötig oder zumindest möglich, den Wassertank bzw. Wasserbehälter vom Getränkeautomaten abzunehmen, beispielsweise um ihn zu einem Wasserhahn oder dergleichen zu tragen.

Herkömmliche Wasserbehälter für Getränkeautomaten weisen hierbei oftmals relativ komplizierte bogenförmige Verschwenkmechanismen auf, wie beispielsweise aus der Drückschrift EP 2 721 975 A1 bekannt. Nachteilig hierbei ist, dass der Deckel im aufgeklappten Zustand (geöffneten Zustand) oberhalb der Einfüllöffnung des Wasserbehälters, d. h. oberhalb einer Oberkante des Wasserbehälters im geöffneten Zustand, in einem Einfüllbereich des Wasserbehälters verbleibt. Dies hat zur Folge, dass eine den Wasserbehälter nachfüllende Bedienperson diesen zwingend von dem Getränkeautomaten abnehmen muss, und dass sie ihn anschliessend nur relativ umständlich und quasi an dem im Einfüllbereich verbleibenden Deckel vorbei von schräg oben befüllen kann.

Andererseits ist beispielsweise aus der Druckschrift DE 10 2004 004 837 B4 eine reine Klapplösung des endseitig am Wasserbehälter angeordneten Deckels vorgesehen. Hierbei kann der Deckel zwar auch in dem am Getränkeautomaten angebauten Zustand relativ weit aus dem Einfüllbereich oberhalb der Einfüllöffnung verschwenkt werden; nachteilig hieran ist jedoch, dass der von dem Getränkeautomaten abnehmbar ausgebildete Wasserbehälter dieser herkömmlichen Lösung im abgenommenen Zustand nur schwierig zu handhaben ist, da eine Handhabungsmöglichkeit wie beispielsweise ein Griff oder ähnliches zum Tragen fehlt. Ähnliche endseitige Klappmechanismen bei Deckeln für Wasserbehälter ohne Verschwenkmöglichkeit und ohne verbesserte Handhabungsmöglichkeiten sind beispielsweise aus der EP 0 404 688 A1 sowie aus der WO 2011/089210 A1 bekannt.

Es ergibt sich also jeweils das Problem, dass sich der Wassertankdeckel bei im Gerät eingesetztem Wassertank nicht komplett öffnen lässt. Dann muss der Tank zum Nachfüllen jeweils aus dem Gerät genommen werden. Bei im Wesentlichen vollständig aufklappbaren Deckeln ist es bei herkömmlichen Lösungen auf der anderen Seite schwierig, den Wassertank zu Reinigungs- oder Nachfüllzwecken aus dem Gerät zu entnehmen bzw. vom Gerät abzunehmen, da die Handhabung durch fehlende Handhabungsmöglichkeiten erschwert wird.

Es ist daher die Aufgabe der vorliegenden Erfindung, einen Wasserbehälter für einen Getränkeautomaten anzugeben, bei welchem die Handhabungsmöglichkeiten sowie die Nachfüllmöglichkeiten gleichzeitig verbessert sind.

In Bezug auf den Wasserbehälter wird die Aufgabe gelöst durch einen Wasserbehälter für einen Getränkeautomaten mit den Merkmalen des unabhängigen Anspruchs 1. In Bezug auf einen Getränkeautomaten, welcher mit einem Wasserbehälter versehen ist, wird die Aufgabe gelöst durch einen Getränkeautomaten mit den Merkmalen des Anspruchs 8.

In Bezug auf den Wasserbehälter wird die Aufgabe insbesondere gelöst durch einen Wasserbehälter für einen Getränkeautomaten, welcher Wasserbehälter eine mittels eines Deckels verdeckbare Einfüllöffnung aufweist und an den Getränkeautomaten anbaubar und von dem Getränkeautomaten abnehmbar ausgebildet ist, sodass, wenn der Wasserbehälter an dem Getränkeautomaten angebaut ist, oberhalb der Einfüllöffnung ein Einfüllbereich definiert ist. Der Deckel ist bewegbar am Wasserbehälter angeordnet und mittels einer Führungseinrichtung derart geführt, dass der Deckel aus dem Einfüllbereich heraus in mindestens eine festgelegte oder festlegbare Öffnungsposition verschwenkbar ist, sodass der Einfüllbereich zumindest von oberhalb frei zugänglich ist. Die Führungseinrichtung weist zum Lagern und Führen des Deckels einen ersten Führungsarm und einen gegenüberliegend angeordneten zweiten Führungsarm auf, wobei der erste Führungsarm und der zweite Führungsarm jeweils ein behälterseitiges Gelenk zur drehbeweglichen Lagerung des zugehörigen Führungsarms am Wasserbehälter sowie jeweils ein deckelseitiges Gelenk zur drehbeweglichen Lagerung des Deckels am zugehörigen Führungsarms aufweist, wobei das behälterseitige Gelenk des ersten Führungsarms und das behälterseitige Gelenk des zweiten Führungsarms eine erste Drehachse und das deckelseitiges Gelenk des ersten Führungsarms und das deckelseitige Gelenk des zweiten Führungsarms eine zweite Drehachse des Deckels definieren, wobei die zweite Drehachse um die erste Drehachse schwenkbar ist. Weiterhin ist der Deckel mittels des ersten Führungsarms und des zweiten Führungsarms derart gelagert, dass in der Öffnungsposition bzw. in mindestens einer der Öffnungspositionen eine Deckfläche des Deckels mit einer Aussenfläche des Wasserbehälters zumindest teilweise in Anlage bringbar ist, sodass er eine aufgeklappte Position annimmt.

Hierdurch ist es in vorteilhafter Weise möglich, den Wasserbehälter wahlweise im an dem Gerät angebauten Zustand zu befüllen, beispielsweise mittels eines separaten Wassergefässes oder ähnlichem, da der Einfüllbereich, d. h. der Bereich oberhalb der Einfüllöffnung des Wasserbehälters bei geöffnetem Deckel auch im an dem Gerät angebauten Zustand ein Einfüllen von Wasser durch seine Lage nicht erschwert. Gleichzeitig ist die Handhabbarkeit des Wasserbehälters im vom Gerät abgenommenen Zustand nicht eingeschränkt, sodass für einen Befüllvorgang, jedoch auch für einen Reinigungsvorgang des Wasserbehälters oder dergleichen, auch ein Abnehmen vom Gerät auf einfache Weise möglich ist. Dadurch, dass der Deckel des Wasserbehälters in einer entsprechenden Öffnungsposition in der aufgeklappten Position an der Aussenfläche des Wasserbehälters anliegt, ergibt sich ein kleinstmöglicher Überstand des Deckels zur Seite, d. h. eine kleinstmögliche Behinderung eines eventuellen Nachfüllvorganges in seitlicher Richtung. Vorzugsweise befindet sich in der aufgeklappten Position des Deckels mindestens eine Seite des Deckels, beispielsweise eine der Längsseiten des Deckels, unterhalb einer Kante der Einfüllöffnung. Mit anderen Worten: Bei einer Befestigung der Führungseinrichtung an den Schmalseiten des Deckels lässt sich der Deckel durch die Verschwenkbewegung einerseits und die Drehbewegung andererseits derart an der Aussenfläche des Wasserbehälters zumindest teilweise zur Anlage bringen, dass mindestens eine der Längsseiten und vorzugweise beide Längsseiten unterhalb der Oberkante des Wasserbehälters in dessen angebauter Position liegen. Hierdurch ergibt sich eine noch bessere seitliche Zugänglichkeit der Einfüllöffnung und somit ein nochmals erleichterter Einfüllvorgäng beim Nachfüllen des Wasserbehälters im angebauten Zustand.

In einer Ausführungsform des Wasserbehälters ist es beispielsweise vorgesehen, dass der Deckel eine im Wesentlichen rechteckige Grundfläche aufweist und mittels der Führungseinrichtung an zwei einander gegenüberliegenden Seiten des Deckels um eine erste Achse verschwenkbar und um eine zweite Achse drehbar gelagert ist.

Durch die rechteckige Grundfläche ist eine einfache Fertigung des Deckels möglich; gleichzeitig ist durch die Lagerung des Deckels mittels der Führungseinrichtungen auf einander gegenüberliegenden Seiten, in der Regel an den Schmalseiten des Deckels, um eine Befestigungsachse der beidseitig am Deckel vorgesehenen Führungseinrichtung ein Drehen des Deckels um diese Befestigungsachse zusätzlich zur Verschwenkbewegung möglich, sodass der Deckel noch besser aus dem Einfüllbereich heraus verlagert werden kann und somit das Einfüllen im am Gerät angebauten Zustand noch besser ermöglichen kann.

Gemäss einem weiteren Aspekt der Erfindung weist die Führungseinrichtung zum Lagern und schwenkbaren Führen des Deckels einen ersten Führungsarm und einen gegenüberliegenden zweiten Führungsarm auf. Jeder der Führungsarme weist hierbei ein behälterseitiges Gelenk zur drehbeweglichen Lagerung des zugehörigen Führungsarms am Behälter sowie jeweils ein deckelseitiges Gelenk zur drehbeweglichen Lagerung des Deckels auf.

Durch die drehbare Lagerung eines jeden der Führungsarme um das jeweilige behälterseitige Gelenk ist eine einfache Verschwenkmöglichkeit des Deckels in eine Position möglich, in welcher der Deckel oberhalb der Einfüllöffnung liegt. Aus dieser Position heraus ist durch ein weiteres Drehen um die jeweiligen behälterseitigen Gelenke und gleichzeitig ein Drehen des Deckel um die deckelseitigen Gelenke eine einfache, aber effektive Möglichkeit geschaffen, den Deckel für einen Nachfüllvorgang soweit wie möglich aus dem Einfüllbereich und einem angrenzenden seitlichen Bereich hinaus zu verschwenken. Gleichzeitig ist auf diese Weise die Möglichkeit geschaffen, den Deckel im zumindest teilweise geöffneten Zustand als Tragegriff für den Wasserbehälter zu verwenden. Durch die Verwendbarkeit des Deckels als Handhabe, nämlich als Tragegriff für den Wasserbehälter, ist ein einfaches Nachfüllen des Wasserbehälters auch im abgenommenen Zustand, beispielsweise unter einem Wasserhahn oder dergleichen möglich. Gemäss einem weiteren Aspekt der Erfindung ist es vorgesehen, dass der Deckel ein Auflageteil, das in einer Geschlossenstellung des Deckels der Behälterinnenseite des Wasserbehälters zugewandt ist, sowie ein Abdeckteil, das in der Geschlossenstellung des Deckels nach aussen frei liegt, aufweist. Eine besondere Formgebung des Auflageteils bzw. die besonders abgestimmte Formgebung von Auflageteil und Abdeckteil zueinander zumindest an deren Rand- und Kantenbereichen (z. B. das Vorsehen gezielter Abschrägungen) erlaubt ein hindernisfreies Verschwenken des Deckels beim Öffnungsvorgang. Gleichzeitig ist durch die Mehrteiligkeit eine leichtere Anpassbarkeit an verschiedene Behälterformen möglich.

Gemäss einem weiteren Aspekt der Erfindung ist die Deckfläche eine aussen liegende Fläche des Auflageteils. Diese Deckfläche, die also in der Geschlossenstellung des Deckels der Behälterinnenseite des Wasserbehälters zugewandt ist, liegt in der Öffnungsstellung des Deckels im aufgeklappten Zustand an der Behälteraussenseite an. Hierdurch ist es möglich, den Verschwenkradius des an den Führungsarmen gelagerten Deckels relativ klein zu halten, was eine einfache Konstruktion des Verschwenkmechanismus mit relativ wenig Materialaufwand ermöglicht. Hierbei ist anzumerken, dass mit Behälterinnenseite jegliche Seiten im Innenraum des Behälters bzw. das Innenvolumen des Behälters bezeichnet sind, also beispielsweise auch die Bodenfläche des Wasserbehälters.

Gemäss einem weiteren Aspekt der Erfindung ist es vorgesehen, dass der Deckel exzentrisch am Wasserbehälter gelagert ist. Hierdurch ist es möglich, dass dann, wenn der Deckel als Tragegriff des Wasserbehälters verwendet wird, der Schwerpunkt des gefüllten Behälters aussermittig in Bezug auf eine durch den getragenen Wasserbehälter verlaufenden gedachten horizontalen Ebene verläuft, wodurch die Handhabbarkeit abermals verbessert wird. Der Bezug hierbei ist die Lage der Gelenke für die Führungsarme am Wasserbehälter, d. h. die Lage des behälterseitigen Gelenks des ersten Führungsarms sowie die Lage des behälterseitigen Gelenks des zweiten Führungsarms.

Nachfolgend wird ein Ausführungsbeispiel der erfindungsgemässen Lösung anhand einer Zeichnung näher erläutert.

Es zeigen:
- Fig. 1:: eine perspektivische Ansicht eines Getränkeautomaten, welcher mit einem Wasserbehälter gemäss einer Ausführungsform der Erfindung versehen ist;
- Fig. 2:: die perspektivische Ansicht aus FIG. 1 ergänzt um eine graphische Darstellung des Einfüllbereichs oberhalb des Deckels des Wasserbehälters;
- Fig. 3:: eine schematische Ansicht des Getränkeautomaten gemäss den Figuren 1 und 2 mit einem erfindungsgemässen Wasserbehälter gemäss der Ausführungsform mit teilweise geöffnetem Deckel;
- Fig. 4:: eine perspektivische Darstellung des Getränkeautomaten mit dem Wasserbehälter gemäss der Ausführungsform aus den Figuren 1 bis 3 mit dem Deckel im aufgeklappten Zustand;
- Fig. 5a, 5b:: eine perspektivische Ansicht bzw. eine Ausschnittvergrösserung in Seitenansicht eines isoliert dargestellten Wasserbehälters gemäss der Ausführungsform, mit dem Deckel im geschlossenen Zustand;
- Fig. 6a, 6b:: Ansichten analog zu den Figuren 5a und 5b, mit dem Deckel in einer teilweise geöffneten Position; und
- Fig. 7a, 7b:: Ansichten analog zu den Figuren 5a und 5b bzw. 6a und 6b, mit dem Deckel in seiner ausgeklappten Position.

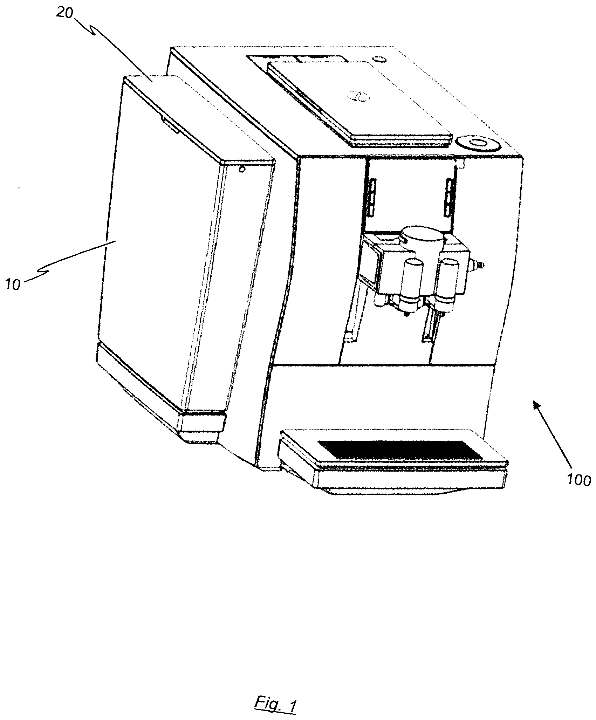

Fig. 1 zeigt in einer perspektivischen Übersichtsdarstellung einen Getränkeautomaten 100, an welchen seitlich ein Wasserbehälter 10 gemäss einer Ausführungsform der Erfindung angesetzt ist. Der Wasserbehälter 10 ist mit Frischwasser befüllbar und weist hierzu in seinem unteren Bereich eine (in den Zeichnungen nicht dargestellte) Wasser-Zufuhreinrichtung zum Zuführen von Wasser an den Getränkeautomaten 100 auf, welche beispielsweise mittels eines Rückschlagventils oder dergleichen ein unkontrolliertes Auslaufen des Wassers aus dem Wasserbehälter 10 verhindert, falls der Wasserbehälter 10 von dem Getränkeautomaten 100 abgenommenen ist.

Der Wasserbehälter 10 ist mit einem Deckel 20 versehen, welcher einerseits für einen homogenen optischen Abschluss des Wasserbehälters 10 sorgt und andererseits den Eintrag von Schmutzpartikeln wie beispielsweise Staub oder dergleichen insbesondere bei längerer Standzeit des Getränkeautomaten 100 verhindert. In der perspektivischen Darstellung gemäss Fig. 1 befindet sich der Deckel 20 in seiner geschlossenen Position.

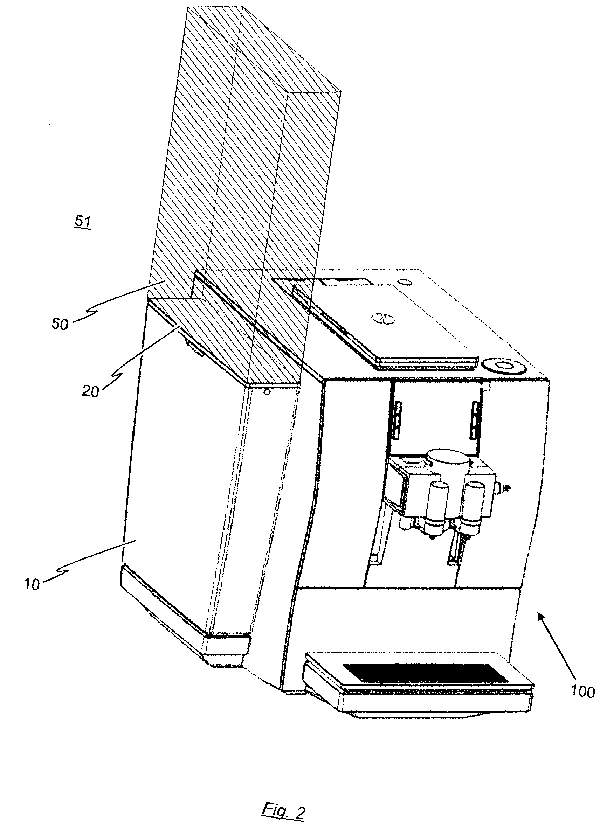

Lediglich zur Erläuterung ist in Fig. 2 eine Darstellung analog zu der perspektivischen Darstellung aus Fig. 1 des Getränkeautomaten 100 mit angebautem Wasserbehälter 10 und geschlossenem Deckel 20 gezeigt. Schematisch angedeutet ist hierbei jedoch ein Einfüllbereich 50 oberhalb des Deckels, welcher bei geöffnetem Deckel in dem an den Getränkeautomaten 100 angebauten Zustand des Wasserbehälters 10 wünschenswerterweise freizuhalten ist, um einen ungehinderten Zugang zur Einfüllöffnung des Wasserbehälters 10 zu ermöglichen. Zudem ist es auch wünschenswert, den vom Getränkeautomaten 100 abgewandten seitlichen Bereich 51 oberhalb des Wasserbehälters 10 in dessen eingebautem Zustand freizuhalten, um eine möglichst ungehinderte Annäherung eines Gefässes zum Nachfüllen des Wasserbehälters 10 aus diesem seitlichen Bereich 51 zu gewährleisten.

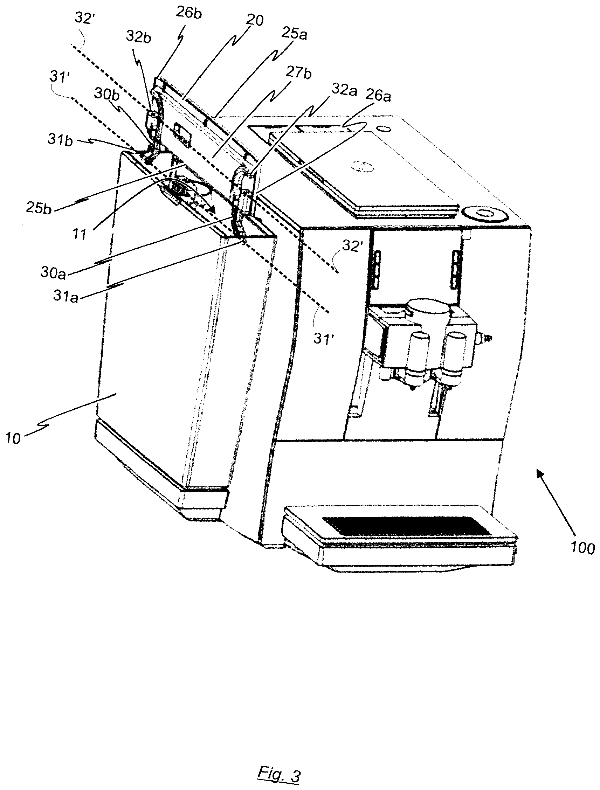

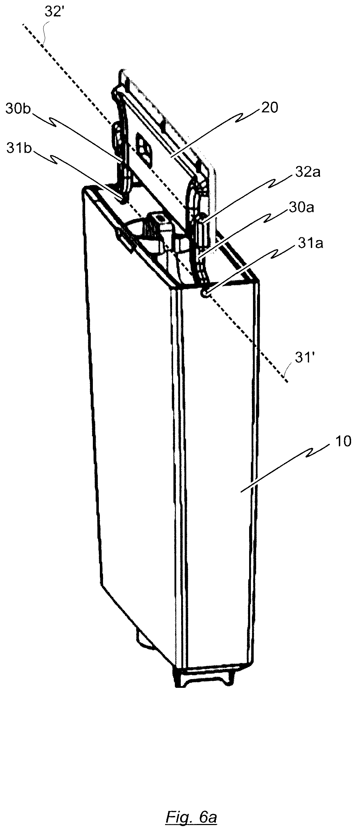

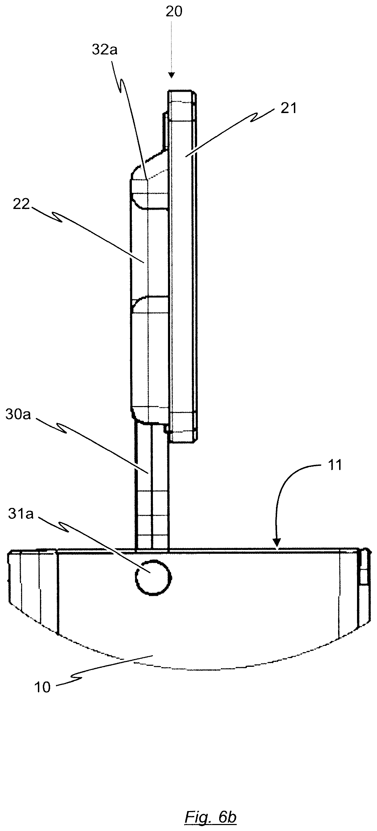

Wie aus der perspektivischen Darstellung in Fig. 3 nun hervorgeht, ist bei dem Wasserbehälter 10 gemäss dem dargestellten Ausführungsbeispiel ein Führungsmechanismus zum Führen des Deckels 20 aus seiner geschlossenen Position (siehe Figuren 1 und 2) in eine bzw. mehrere geöffnete Positionen (Öffnungspositionen) vorgesehen. Um die Einfüllöffnung 11 des Wasserbehälters 10 freizulegen, kann der Deckel 20 aus dem Einfüllbereich 50 heraus mittels der Führungseinrichtung geöffnet und verschwenkt werden. Unter Zuhilfenahme der perspektivischen Einzeldarstellung des Wasserbehälters 10 gemäss der Ausführungsform aus Fig. 6a sowie der zugehörigen Seitenansicht in Ausschnittvergrösserung aus Fig. 6b ist folgendes ersichtlich: Auf jeder der Schmalseiten 26a, 26b des Deckels 20 ist jeweils ein Führungsarm 30a, 30b vorgesehen, in der Darstellung gemäss den Figuren 3 bzw. 6a und 6b ein vorne liegender erster Führungsarm 30a sowie ein hinten liegender zweiter Führungsarm 30b. Der erste Führungsarm 30a ist mittels eines behälterseitigen Gelenks 31a des ersten Führungsarms am Wasserbehälter 10 drehbar gelagert. Auf analoge Weise ist der zweite Führungsarm 30b mittels eines behälterseitigen Gelenks 31b des zweiten Führungsarms ebenso auf der gegenüberliegenden Seite am Wasserbehälter 10 drehbeweglich gelagert. Dank der behälterseitigen Gelenke 31a, 31b ist der Deckel 10 mittels der Führungsarme 30a, 30b um eine erste Achse 31' relativ zum Wasserbehälter 10 schwenkbar.

Auf ähnliche Weise ist der Deckel 20 an seiner in den Darstellungen vorne liegenden Schmalseite 26a mittels eines deckelseitigen Gelenks 32a des ersten Führungsarms an dem Führungsarm drehbar gelagert; wiederum auf analoge Weise ist der Deckel 20 an der Schmalseite 26b mittels eines deckelseitigen Gelenks 32b des zweiten Führungsarms 30b drehbar gelagert, sodass eine Drehachse des Deckels durch die jeweiligen deckelseitigen Gelenke 32a, 32b definiert wird. Dank der deckelseitigen Gelenke 32a, 32b ist der Deckel 10 um eine zweite Achse 32' relativ zu den Führungsarmen 30a, 30b drehbar. Die zweite Achse 32' ist in einem Abstand zur ersten Achse 31' angeordnet. Demzufolge ist die zweite Achse 32' um die erste Achse 31' verschwenkbar angeordnet.

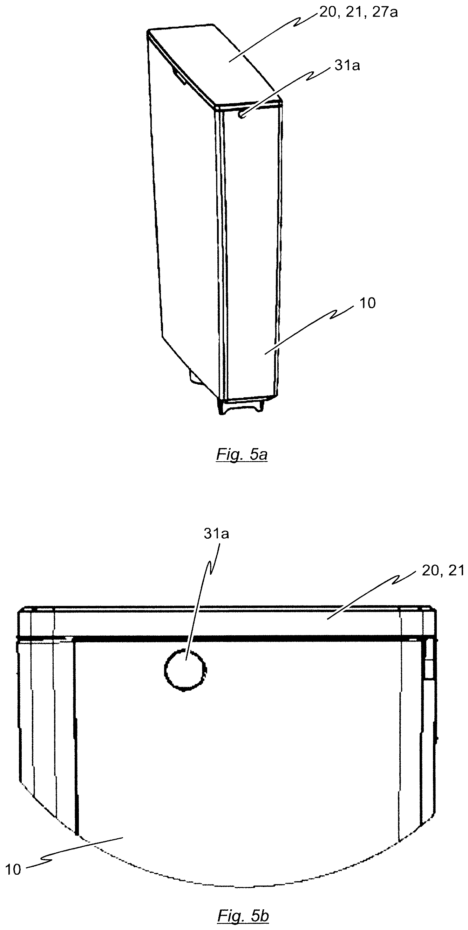

Wie insbesondere aus der Darstellung in Fig. 6b hervorgeht, weist der Deckel ein Auflageteil 22 sowie ein Abdeckteil 21 auf. Das Abdeckteil 21 bildet in der Geschlossenstellung des Deckels 20 (siehe Fig. 5a und 5b) mit seiner nach aussen gewandten Seite (Deckfläche 27a) einen homogenen optischen sowie weitgehend dichten Abschluss gegen den Eintritt von Staub und dergleichen.

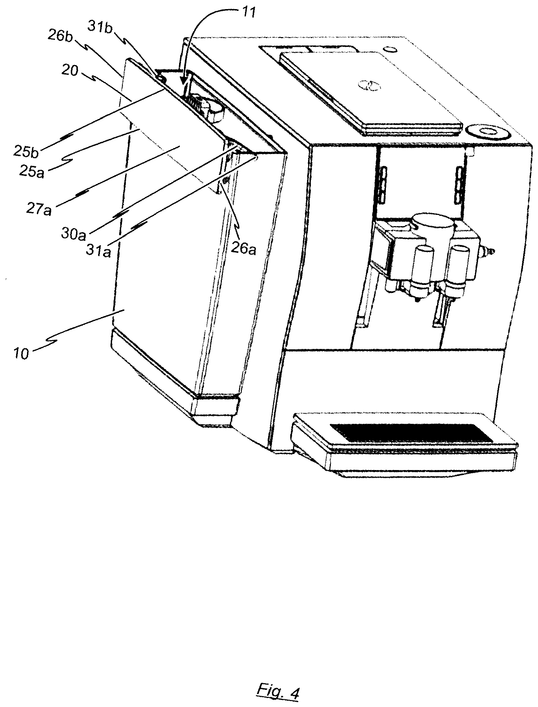

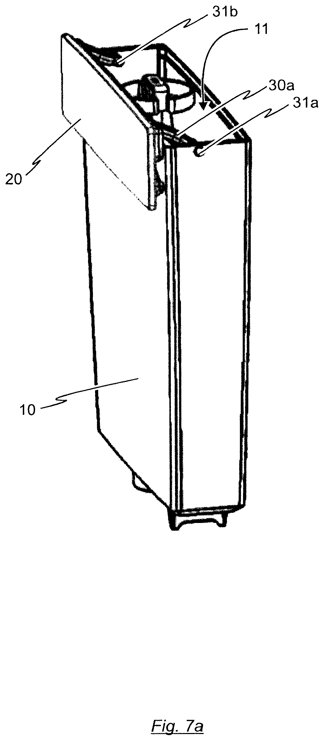

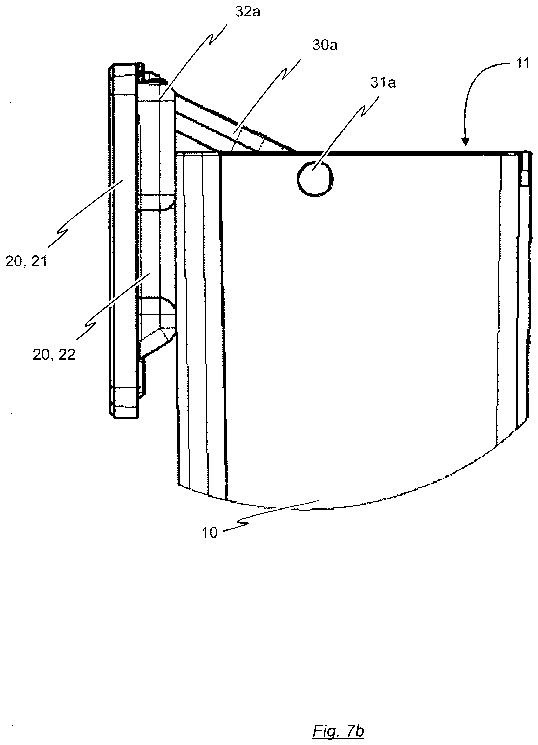

Wie weiter aus der perspektivischen Darstellung in Fig. 4 (Darstellung des Wasserbehälters 10 gemäss der Ausführungsform im angebauten Zustand an den Getränkeautomaten 100) bzw. den Figuren 7a und 7b hervorgeht, kann der Deckel 20 in die in den Figuren 4 sowie 7a und 7b gezeigte ausgeklappte Position verschwenkt werden, und zwar durch die Drehbarkeit um die behälterseitigen Gelenke 31a, 31b der Führungsarme 30a bzw. 30b einerseits sowie die deckelseitigen Gelenke 32a, 32b der Führungsarme 30a bzw. 30b andererseits. In der dargestellten ausgeklappten Position kommt eine am Auflageteil 22 des Deckels ausgebildete Deckfläche 27b des Deckels 20 derart mit einer Aussenwand des Wasserbehälters 10 zur Anlage, dass die untenliegende Längsseite 25a des Deckels deutlich unterhalb der Oberkante der Einfüllöffnung 11 des Wasserbehälters 10 zum Anliegen kommt. Gleichzeitig ist dadurch auch die obenliegende Längsseite des Deckels 25b ein gutes Stück bezogen auf den Wasserbehälter 10 in seiner eingebauten Stellung nach unten verschoben, sodass der automatenabgewandte seitliche Bereich 51 sowie der Einfüllbereich 50 beim Nachfüllen im angebauten Zustand des Wasserbehälters 10 weiträumig frei liegen bzw. zugänglich sind.

Gleichzeitig ist es möglich, den Deckel 20 mittels der Führungseinrichtung (Führungsarme 30a, 30b, behälterseitige Gelenke 31a, 31b, deckelseitige Gelenke 32a, 32b) zum Handhaben in der vom Getränkeautomaten 100 abgenommenen Position des Wasserbehälters 10 in eine derartige Stellung zu verschwenken, dass der Deckel auch als Tragegriff verwendet werden kann. Hierbei kommt der erfindungsgemässen Lösung, wie sie sich auch in der Ausführungsform niederschlägt, zugute, dass durch die drehbewegliche Lagerung um die behälterseitigen Gelenke 31a, 31b einerseits und zudem um die deckelseitigen Gelenke 32a, 32b eine angenehm handhabbare Stellung des Deckels zum Tragen eingenommen werden kann, nämlich mit einer grossen Auflagefläche für die Hand der tragenden Person. Wie hierbei aus den Darstellungen in den Figuren 5b bzw. 6b hervorgeht, ist zudem durch die exzentrische Anordnung der behälterseitigen Gelenke 31a, 31b bei der Verwendung des Deckels 20 als Tragegriff für den Wasserbehälter 10 der Schwerpunkt des Wasserbehälters 10 innerhalb einer gedachten horizontalen Ebene aus der Mitte des getragenen Wasserbehälters 10 heraus verschoben, was das Tragen erleichtert.

Es sei an dieser Stelle darauf hingewiesen, dass die vorliegende Erfindung nicht auf die beschriebene Ausführungsform beschränkt ist. Abänderungen und Ergänzungen des vorgehend Beschriebenen sind dem Fachmann geläufig und vom Erfindungsgedanken mit umfasst.

## Patentansprüche

1. Wasserbehälter (10) für einen Getränkeautomaten (100), welcher Wasserbehälter (10) eine mittels eines Deckels (20) verdeckbare Einfüllöffnung (11) aufweist und an den Getränkeautomaten (100) anbaubar und von dem Getränkeautomaten (100) abnehmbar ausgebildet ist, sodass, wenn der Wasserbehälter (10) an dem Getränkeautomaten (100) angebaut ist, oberhalb der Einfüllöffnung (11) ein Einfüllbereich (50) definiert ist,
wobei der Deckel (20) bewegbar am Wasserbehälter (10) angeordnet ist und mittels einer Führungseinrichtung (30a, 30b, 31a, 31b, 32a, 32b) derart geführt ist, dass der Deckel (20) aus dem Einfüllbereich (50) heraus in mindestens eine festgelegte oder festlegbare Öffnungsposition verschwenkbar ist, sodass der Einfüllbereich (50) zumindest von oberhalb frei zugänglich ist,
wobei die Führungseinrichtung zum Lagern und Führen des Deckels (20) einen ersten Führungsarm (30a) und einen gegenüberliegend angeordneten zweiten Führungsarm (30b) aufweist,
**dadurch gekennzeichnet, dass**
der erste Führungsarm (30a) und der zweite Führungsarm (30b) jeweils ein behälterseitiges Gelenk (31a, 31b) zur drehbeweglichen Lagerung des zugehörigen Führungsarms (30a, 30b) am Wasserbehälter (10) sowie jeweils ein deckelseitiges Gelenk (32a, 32b) zur drehbeweglichen Lagerung des Deckels (20) am zugehörigen Führungsarms (30a, 30b) aufweist, wobei das behälterseitige Gelenk (31a) des ersten Führungsarms (30a) und das behälterseitige Gelenk (31b) des zweiten Führungsarms (30b) eine erste Drehachse (31') und das deckelseitiges Gelenk (32a) des ersten Führungsarms (30a) und das deckelseitige Gelenk (32b) des zweiten Führungsarms (30b) eine zweite Drehachse (32') des Deckels (20) definieren, wobei die zweite Drehachse (32') um die erste Drehachse (31') schwenkbar ist und
der Deckel (20) mittels des ersten Führungsarms (30a) und des zweiten Führungsarms (30b) derart gelagert ist, dass in der Öffnungsposition bzw. in mindestens einer der Öffnungspositionen eine Deckfläche (27b) des Deckels (20) mit einer Aussenfläche des Wasserbehälters (10) zumindest teilweise in Anlage bringbar ist, sodass er eine aufgeklappte Position annimmt.

2. Wasserbehälter (10) nach Anspruch 1, wobei der Deckel (20) eine im Wesentlichen rechteckige Grundfläche aufweist und mittels der Führungseinrichtung an zwei einander gegenüberliegenden Seiten des Deckels (20) um die erste Drehachse (31') verschwenkbar und um die zweite Drehachse (32') drehbar gelagert ist.

3. Wasserbehälter (10) nach Anspruch 2, wobei mindestens eine Seite (25a) des Deckels in der aufgeklappten Position des Deckels (20) unterhalb einer Kante der Einfüllöffnung (11) liegt.

4. Wasserbehälter (10) nach einem der Ansprüche 2-3, wobei der Deckel (20) ein Auflageteil (22), das in einer Geschlossenstellung des Deckels (20) der Behälterinnenseite des Wasserbehälters (10) zugewandt ist, sowie ein Abdeckteil (21), das in der Geschlossenstellung des Deckels (20) nach aussen frei liegt, aufweist.

5. Wasserbehälter (10) nach Anspruch 4, wobei die Deckfläche (27b) eine aussen liegende Fläche des Auflageteils (22) ist.

6. Wasserbehälter (10) nach einem der vorhergehenden Ansprüche, wobei der Deckel (20) im geöffneten bzw. zumindest teilweise geöffneten Zustand als Tragegriff für den Wasserbehälter (10) verwendbar ist.

7. Wasserbehälter (10) nach einem der vorhergehenden Ansprüche, wobei der Deckel (20) exzentrisch am Wasserbehälter (10) gelagert ist.

8. Getränkeautomat (100), vorzugsweise Kaffeevollautomat, welcher zur Versorgung mit Frischwasser zur Getränkebereitung mit einem Wasserbehälter (10) nach einem der vorhergehenden Ansprüche versehen ist.

## Claims

1. A water container (10) for a beverage vending machine (100), which water container (10) has a filling opening (11) which can be covered by means of a lid (20) and is constructed so as to be attachable to the beverage vending machine (100) and detachable from the beverage vending machine (100), so that when the water container (10) is attached to the beverage vending machine (100) a filling area (50) is defined above the filling opening (11),
wherein the lid (20) is arranged on the water container (10) so as to be movable and is guided by means of a guide device (30a, 30b, 31a, 31b, 32a, 32b) in such a manner that the lid (20) can be pivoted out of the filling area (50) into at least one defined or definable opening position, so that the filling area (50) is freely accessible at least from above,
wherein in order to support and guide the lid (20) the guide device has a first guide arm (30a) and a second guide arm (30b) arranged opposite said first arm,
**characterized in that**
the first guide arm (30a) and the second guide arm (30b) are each equipped with a container-side joint (31a, 31b) for supporting the associated guide arm (30a, 30b) in rotatably movable manner on the water container (10), and with a lid-side joint (32a, 32b) for supporting the lid (20) in rotatably movable manner on the associated guide arm (30a, 30b), wherein the container-side joint (31a) of the first guide arm (30a) and the container-side joint (31b) of the second guide arm (30b) define a first axis of rotation (31'), and the lid-side joint (32a) of the first guide arm (30a) and the lid-side joint (32b) of the second guide arm (30b) define a second axis of rotation (32') of the lid (20), wherein the second axis of rotation (32') is pivotable about the first axis of rotation (31'), and
the lid (20) is supported by means of the first guide arm (30a) and the second guide arm (30b) in such manner that in the open position or in at least one of the open positions a cover surface (27b) of the lid (20) can be brought to bear at least partially on an outer surface of the water container (10), so that it assumes an unfolded position.

2. The water container (10) according to claim 1, wherein the lid (20) has a substantially rectangular base area and is supported by means of the guide device on two opposite sides of the lid (20) so as to be pivotable about the first axis of rotation (31') and rotatable about the second axis of rotation (32').

3. The water container (10) according to claim 2, wherein at least one side (25a) of the lid (20) is located below an edge of the filling opening (11) when the lid is in the unfolded position.

4. The water container (10) according to either of claims 2 - 3, wherein the lid (20) has a bearing part (22) which faces the interior of the water container (10) when the lid (20) is in a closed position, and a cover part (21) which is outwardly exposed when the lid (20) is in the closed position.

5. The water container (10) according to claim 4, wherein the cover surface (27b) is a surface of the bearing part (22) that is located on the outside.

6. The water container (10) according to any one of the preceding claims, wherein, in the open or at least partially open state, the lid (20) is usable as a carrying handle for the water container (10).

7. The water container (10) according to any one of the preceding claims, wherein the lid (20) is supported eccentrically on the water container (10).

8. A beverage vending machine (100), preferably a fully automatic coffee machine, which is provided with a water container (10) according to any one of the preceding claims to enable supply with fresh water for preparing beverages.

## Revendications

1. Réservoir d'eau (10) pour un distributeur automatique de boissons (100), lequel réservoir d'eau (10) comporte une ouverture de remplissage (11) pouvant être couverte au moyen d'un couvercle (20) et étant constitué pouvant être monté sur le distributeur automatique de boissons (100) et pouvant être détachable du distributeur automatique de boissons (100) de telle sorte que si le réservoir d'eau (10) est monté sur le distributeur automatique de boissons (100), une zone de remplissage (50) est définie au-dessus de l'ouverture de remplissage (11),
le couvercle (20) étant disposé mobile sur le réservoir d'eau (10) et étant guidé au moyen d'un système de guidage (30a, 30b, 31a, 31b, 32a, 32b) de telle sorte que le couvercle (20) peut être pivoté de la zone de remplissage (50) dans au moins une position d'ouverture fixe ou pouvant être fixe de telle sorte que la zone de remplissage (50) est librement accessible au moins par le haut,
le système de guidage comportant un premier bras de guidage (30a) et un deuxième bras de guidage (30b) disposé de manière opposée pour supporter et guider le couvercle (20),
**caractérisé en ce que**
le premier bras de guidage (30a) et le deuxième bras de guidage (30b) comportent respectivement une articulation (31a, 31b) côté réservoir pour le logement mobile en rotation du bras de guidage correspondant (30a, 30b) sur le réservoir d'eau (10) ainsi que respectivement une articulation côté couvercle (32a, 32b) pour le logement mobile en rotation du couvercle (20) sur le bras de guidage correspondant (30a, 30b), l'articulation côté réservoir (31a) du premier bras de guidage (30a) et l'articulation côté réservoir (31b) du deuxième bras de guidage (30b) définissant un premier axe de rotation (31') et l'articulation côté couvercle (32a) du premier bras de guidage (30a) et l'articulation côté couvercle (32b) du deuxième bras de guidage (30b) définissant un deuxième axe de rotation (32') du couvercle (20), le deuxième axe de rotation (32') pouvant pivoter autour du premier axe de rotation (31'), et
le couvercle (20) étant logé au moyen du premier bras de guidage (30a) et du deuxième bras de guidage (30b) de telle sorte que dans la position d'ouverture ou au moins dans une des positions d'ouverture, une surface de couverture (27b) du couvercle (20) peut être placée au moins partiellement en appui avec une surface extérieure du réservoir d'eau (10) de telle sorte qu'elle adopte une position relevée.

2. Réservoir d'eau (10) selon la revendication 1, le couvercle (20) comportant pour l'essentiel une surface de base rectangulaire et pouvant être pivoté au moyen du système de guidage sur les deux côtés opposés l'un à l'autre du couvercle (20) autour du premier axe de rotation (31') et étant logé pouvant tourner autour du deuxième axe de rotation (32').

3. Réservoir d'eau (10) selon la revendication 2, au moins un côté (25a) du couvercle étant situé dans la position relevée du couvercle (20) en dessous d'un bord de l'ouverture de remplissage (11).

4. Réservoir d'eau (10) selon l'une quelconque des revendications 2 - 3, le couvercle (20) comportant une partie de support (22), qui est tournée dans une position de fermeture du couvercle (20) du côté intérieur du réservoir d'eau (10), ainsi qu'une partie de couverture (21), qui est située librement vers l'extérieur dans la position de fermeture du couvercle (20).

5. Réservoir d'eau (10) selon la revendication 4, la surface de couverture (27b) étant une surface de la partie de support (22) située à l'extérieur.

6. Réservoir d'eau (10) selon l'une quelconque des revendications précédentes, le couvercle (20) pouvant être utilisé à l'état ouvert ou au moins partiellement ouvert comme poignée de transport pour le réservoir d'eau (10).

7. Réservoir d'eau (10) selon l'une quelconque des revendications précédentes, le couvercle (20) étant logé de façon excentrique sur le réservoir d'eau (10).

8. Distributeur automatique de boissons (100), de préférence distributeur automatique de café, lequel est doté d'un réservoir d'eau (10) selon l'une quelconque des revendications précédentes pour l'alimentation en eau fraîche destinée à la préparation des boissons.
